# EUROPÄISCHE PATENTSCHRIFT

(11) **EP 3 442 384 B1**
(45) Veröffentlichungstag und Bekanntmachung des Hinweises auf die Patenterteilung: **03.11.2021**
(21) Anmeldenummer: 17726144.3
(22) Anmeldetag: 05.04.2017
(51) Int. Cl.: A47J 37/06, A47J 37/07

(54) **LEITBLECH UND ZUGEHÖRIGER GRILL**
DEFLECTOR AND GRILL WITH DEFLECTOR
DÉFLECTEUR ET GRIL AVEC DÉFLECTEUR

(30) Priorität: 13.04.2016 CH 4822016
(43) Veröffentlichungstag der Anmeldung: 20.02.2019
(73) Patentinhaber: Outdoorchef AG, 8052 Zürich (CH)
(72) Erfinder: BITTEL, Andre, 5644 Auw (CH)
(74) Vertreter: Frommhold, Joachim
(86) Internationale Anmeldenummer: PCT/IB2017/051947
(87) Internationale Veröffentlichungsnummer: WO 2017/178926

(56) Entgegenhaltungen:
- DE-U1-202013 100 613
- DE-U1-202014 004 089
- US-A- 5 878 739
- US-A1- 2002 195 096
- US-A1- 2010 101 558

## Beschreibung

Die Erfindung betrifft einen Grill, zum Beispiel einen Gasgrill nach dem Oberbegriff des Patentanspruchs 1 zum Grillen, Garen oder Backen von Speisen auf einem Grillrost oder dergleichen, insbesondere zur Verwendung im Freien. Er weist eine Brennkammer auf, in der eine Brenneranordnung vorgesehen ist, wobei die Brennkammer mit einer klappbaren Haube versehen ist, die im geschlossenen Zustand einen Grillrost abdeckt.

Grills und Gasgrills zum Garen von Grillgut resp. Speisen weisen zumindest einen Grillkörper mit einem Grillrost oder dergleichen zur Auflage des Grilliergutes sowie darunter befindlichen Mitteln zur Wärmeerzeugung, insbesondere glühende Holzkohle, Pellets, Heizelemente oder Gasbrenner auf. Je nach Ausstattung der Grillgeräte ist weiterhin ein Deckel oder eine Haube zum Verschluss des Grillkörpers vorgesehen. Bei einfachen Grills ist der Deckel vom Grillkörper getrennt und lose aufsetzbar. Bei vielen Grills ist der Deckel als Klappdeckel jedoch fest mit dem Grillkörper verbunden.

Aus der EP 0653917 B1 ist ein Grill zur Verwendung im Freien bekannt, bei dem zwischen einer Wärmequelle, insbesondere ein Gasbrennerring im unteren Bereich eines Grillbehälters und einem Rost zur Auflage des Grilliergutes eine Wandung eingesetzt ist, die Tropfen vom Grilliergut, insbesondere Fett oder Wasser auf die Wärmequelle verhindert und solche Tropfen oberhalb der Wärmequelle sammelnd auffängt. Die Tropfen werden in einen, unterhalb der Wärmequelle angeordneten Behälter geleitet. Hierbei sind diejenigen Bereiche der Wandung, die aufgrund ihrer Temperatur ein Verdampfen von Tropfen bewirken, in einem Winkel von 30° bis 70° zur Horizontalen geneigt angeordnet. Die Wandung ist in Form von Kugelschalenabschnitten gebildet. Sie beinhaltet Leitmittel, die die Tropfen in einen zentralen Aussparungsbereich der Wärmequelle und von da in einen unterhalb der Wärmequelle angeordneten Behälter leiten.

Bei einem Gasgrillgerät gemäss DE 202012100587 U ist unterhalb einer Brennereinheit eine Fettauffangeinrichtung angeordnet, die mehrere, nebeneinander befindliche Fettauffangschalen umfasst. Eine ähnliche Lösung ist in der US 4909137 A offenbart. Ebenso können anstelle von Schalen auch Ablaufwinkel (DE 08804071 U) oder Rinnen (DE 2020099014563 U) Verwendung finden.

Bei einem weiteren Grill dieser Art ist eine Einrichtung zur Wärmeleitung vorgesehen, die Garvorgänge bei direkter und indirekter Wärmeführung ermöglicht. Beim direkten Grillen wird die Wärme der Wärmequelle bei offenem Deckel direkt auf das zu garende Grilliergut geleitet, während beim indirekten Grillen die Wärme von der Wärmequelle mittels einer Wärmeleiteinrichtung seitlich um das Grilliergut geführt wird und erst durch Umlenkung unter dem geschlossenen Deckel auf das Grilliergut gelangt. Zum Wechsel zwischen direkter und indirekter Wärmeführung weist der Grillkörper einen Einsatz mit verschliessbaren Öffnungen auf. Mittels eines aussen am Grillkörper geführten Handgriffs, der mit dem Einsatz verbunden ist, kann die Offen- und Schliessstellung der Öffnungen erreicht werden. In der DE 202014004089 U wird zudem eine Brennerabdeckung aus V-förmig abgewinkelten Elementen für eine homogene Wärmeverteilung vorgeschlagen, die den gesamten Brennerraum überdeckt.

In der US 2002/195096 A1 ist ein Grill mit verschiedenen Grilloptionen offenbart. Dieser Grill umfasst eine Brennkammer mit einem Brenner, wobei die Brennkammer mit einer klappbaren Haube versehen ist. Der Grill ist weiterhin mit einem Grillrost und einem Bratrost versehen. Unterhalb des Grillrosts ist eine Brennerabdeckung als Diffusor vorgesehen, was eine indirekte Erwärmung des Grillguts ermöglicht. Die Brennerabdeckung erstreckt sich zwischen Rückwand und Frontseite der Brennkammer und liegt an deren inneren Rändern auf.

Zur Verbesserung der Grillleistung können auch Brenner oder Heizstrahler seitlich zum Grillrost angeordnet sein und/oder für variables Grillen sind unterschiedliche Grillroste oder Grillkammern vorgesehen.

Der Erfindung liegt nun die Aufgabe zugrunde, einen Grill zum Grillen, Garen oder Backen von Speisen wie Fleisch oder Fisch auf einem Grillrost oder dergleichen, insbesondere zur Verwendung im Freien zu schaffen, der eine einfache und zuverlässige Umstellung zwischen direktem und indirektem Grillen sowie direktes und indirektes Grillen gleichzeitig und energiesparend ermöglicht.

Die Aufgabe ist mit den Merkmalen des Patentanspruchs 1 gelöst.

Erfindungsgemäss ist ein Leitblech für einen Grill, zum Beispiel einen Gasgrill, der eine Brennkammer für eine Wärmequelle, wie zum Beispiel Gasbrenner, Elektroheizungen oder Holzkohle aufweist, so ausgebildet, dass es ansteigend in einen gerundeten Bereich übergeht, an den sich ein weiterer geneigter Bereich anschliesst. Weiterhin sind die geneigten Bereiche an Auflagestellen zur Brennkammer hin winklig abgekantet. Es ist zwischen einer frontseitigen Kante und dem gerundeten Bereich mit mindestens einer oder mehreren Vertiefungen versehen, die an ihrer tiefsten Stelle mindestens eine Öffnung aufweisen, wobei im gerundeten Bereich eine Mehrzahl von Öffnungen bzw. Schlitzen vorgesehen ist.

Das Leitblech ist mit Vertiefungen und Abtropfelementen versehen, in denen Flüssigkeit aus dem Gargut zusammenfliessen und ablaufen kann.

Aufgrund des erfindungsgemässen Leitblechs kann energiesparend auf Rückenbrenner oder seitlich angeordnete Heizstrahler verzichtet werden. Neben einer Gas- bzw. Energieeinsparung verbessert dies auch die Arbeitssicherheit beim Grillen. Das erfindungsgemässe Leitblech ermöglicht eine Geschmacksverstärkung des Grillguts.

Das erfindungsgemässe Leitblech ist einfach zu reinigen und ohne Einsatz von Werkzeugen einlegbar und aus dem Gasgrill entnehmbar, so dass es auch in einem Geschirrspüler gereinigt werden kann.

Bevorzugte Ausführungsformen sind in den abhängigen Ansprüchen offenbart.

So weist ein Grill, zum Beispiel ein Gasgrill, das erfindungsgemässe Leitblech auf, das ohne Befestigungselemente auf oder in einer Brennkammer des Grills anordenbar ist und das insbesondere in Verbindung mit einem Drehspiess eingesetzt ist.

Der erfindungsgemässe Grill ist zum Grillen, Garen oder Backen von Speisen wie Fleisch, Fisch, Milchprodukten, Gemüse oder Backwaren auf einem Grillrost oder dergleichen, insbesondere zur Verwendung im Freien geeignet.

Weiterhin ist ein, ebenfalls ohne Werkzeug einsetzbares Trennblech vorgesehen, das die gleichzeitige Anwendung unterschiedlicher Garverfahren zulässt und das auch als Halterung, zum Beispiel für einen Drehspiess oder Ablagen verwendbar ist.

Die Erfindung wird nachfolgend in einem Ausführungsbeispiel in Form eines Gasgrills anhand einer Zeichnung näher beschrieben. In der Zeichnung zeigen die
Fig. 1: einen erfindungsgemässen Grill in Teilansicht,
Fig. 2: ein erfindungsgemässes Leitblech für indirektes Grillen,
Fig. 3: ein erfindungsgemässes Trennblech,
Fig. 4: den Grill nach Fig. 1 in Rückansicht,
Fig. 5: das Leitblech nach Fig. 2 in anderer Ausführungsform und
Fig. 6: das Leitblech nach Fig. 5 in weiterer Ausführungsform

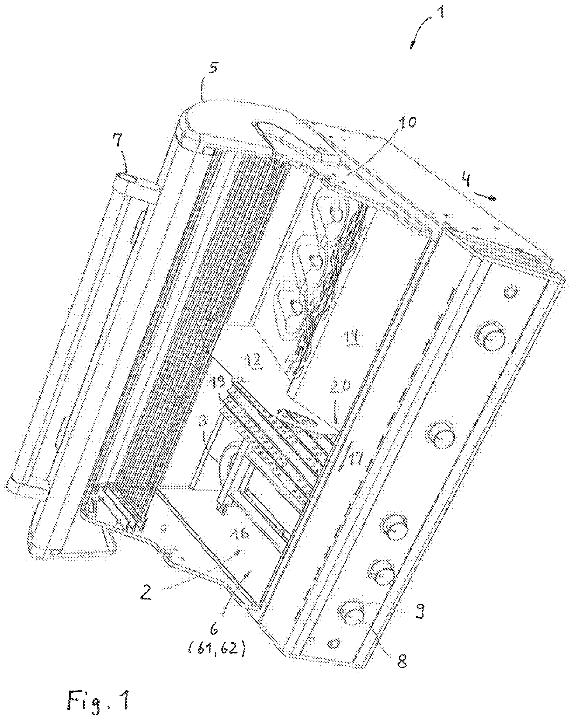

Ein erfindungsgemässer Grill, im Ausführungsbeispiel ein Gasgrill 1 (Fig. 1) weist eine Brennkammer 2 auf, in der eine Brenneranordnung 3 vorgesehen ist, wobei die Brennkammer 2 mit einer klappbaren Haube 5 versehen ist, die im geschlossenen Zustand einen Grillrost 6 abdeckt. Die Haube 5 ist mittels Scharnier an der Rückwand der Brennkammer 2 oder an, den Grillrost 6 dreiseitig umgebenden Seitenwänden 10 angeschlagen. Für das Auf- und Zuklappen ist die Haube 5 mit einem Handgriff 7 versehen. Zwischen Brennern der Brenneranordnung 3 und dem Grillrost 6 ist noch ein Flammenschutz 19 positioniert, der dazu dient, die Gefahr resp. die Auswirkungen von Fettflammenbrand o. a. zu reduzieren.

Die Brennkammer 2 ist auf einem, ggf. rollfähigen Untergestell 4 aufsitzend angeordnet und kann über seitliche, nicht dargestellte Ablagen für Geschirr oder Grillgut verfügen.

Die Brenneranordnung 3 umfasst mindestens ein zum Beispiel ringförmiges oder in Schlaufen angeordnetes Brennerrohr (im einfachsten Fall ein gerades Brennerrohr) mit Ausströmöffnungen für ein Brenngas.

Das Untergestell 4 dient in bekannter Weise der Unterbringung von Gasflasche, Armaturen, Grillwerkzeugen, Geschirr etc. und kann offen oder bevorzugt mittels seitlichen Wänden und Türen geschlossen ausgebildet sein.

An der, dem Benutzer zugewandten Frontwand (Frontpanel) der Brennkammer 2 ragt mindestens ein, mit den Brennern der Brenneranordnung 3 in üblicher Ausführung gekoppelter Drehgriff 8 zur Einstellung der Brennerleistung. Der Drehgriff 8 ist mit einem Leuchtring 9 in Form farbiger LED's in der Frontwand umgeben. Dieser Leuchtring 9 leuchtet auf, sobald ein, nicht dargestelltes Gasventil geöffnet und die Zündeinrichtung des Brenners aktiv ist, insbesondere bereits vor dem ausströmen von Gas. Die Zündeinrichtung kann dazu zum Beispiel am Ventil oder mit einem separaten "Startknopf" gekoppelt sein.

Auf oder in der Brennkammer 2 sind oberhalb resp. beabstandet von der Brenneranordnung 3 Grillroste 6 unterschiedlicher Art auf- bzw. einlegbar, sowohl Stab- oder Gitterroste oder Plattenroste. Die festen Seitenwände 10 begrenzen die Grill- bzw. Rostfläche, können aufgrund ihrer Formgebung die Haube 5 seitlich führen und können auch Aufnahmen 11 für einen Drehspiess o. a. aufweisen.

Weiterhin ist der Gasgrill 1 mit einem Leitblech 14 (DGS heat diffuser, wobei DGS für Dual Gourmet System steht) versehen, das in Richtung der Hauptachse 17 des Gasgrills 1 zumindest einen Teil der Brenneranordnung 3 und des Flammenschutzes 19 zwecks indirekter Hitze bzw. indirekter Wärmeführung abdeckt. Grundsätzlich kann es jedoch in beliebiger Breite ausgeführt sein. Es liegt wie auch ein Trennblech 12 auf den inneren Rändern der Brennkammer 2 auf.

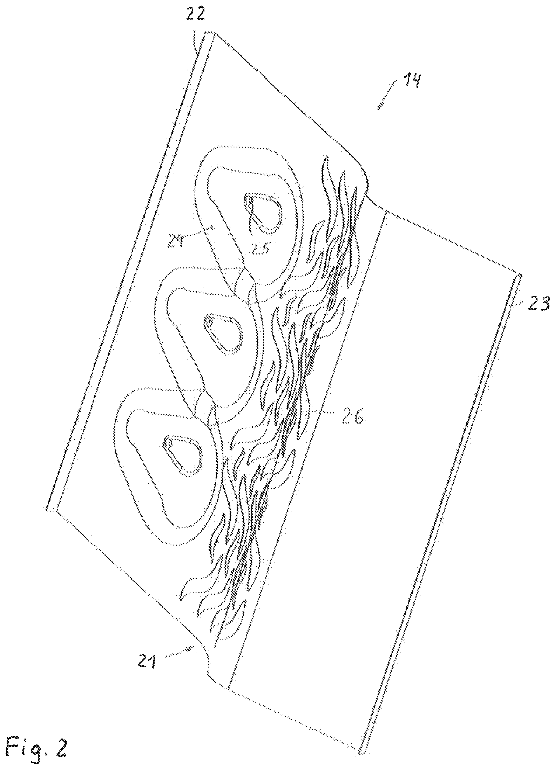

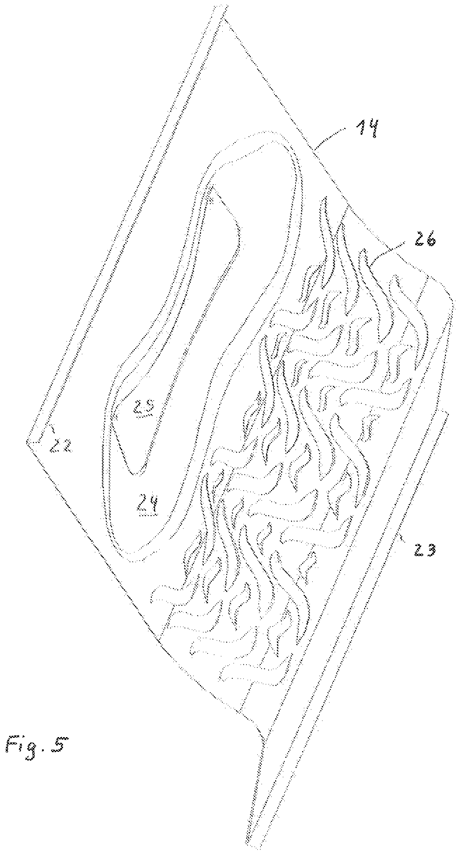

Das Leitblech 14 weist keine Befestigungselemente zur Verbindung mit der Brennerkammer 2 o. a. auf und ist lose ein- oder auflegbar (Fig. 1, 2, 5 und 6).

Das Leitblech 14 erstreckt sich zwischen Frontseite und Rückwand der Brennkammer 2, mit einer, von der Frontseite (oder umgekehrt von der Rückseite) ausgehend, ansteigenden Neigung in Bezug auf die Brennkammerebene 16 bis zu einem gerundeten Bereich 21 und fällt nach dem gerundeten Bereich 21 wieder ab und kann bis zur Auflage an der Rückseitenwand (oder umgekehrt zur Frontseitenwand) ggf. wieder leicht ansteigen.

Kanten 22, 23 des Leitbiechs 14 sind an den Auflagestellen senkrecht zur Hauptfläche des Leitblechs 14 winklig, bevorzugt um bis zu 90° abgekantet, an der Rückwand nach oben abgekantet und an der Frontseite nach unten abgekantet. Somit kann die rückwandseitige Kante 23 zugleich als Sammel- und Ablaufrinne für, beim Grillen freiwerdende Flüssigkeit verwendet werden, von der die Flüssigkeit wiederum auf ein darunter befindliches Sammelblech gelangt. Zwischen der frontseitigen Kante 22 und dem gerundeten Bereich 21 ist das Leitblech 14 mit mindestens einer oder mehreren, bevorzugt zwei oder drei Vertiefungen 24 (Auffangvertiefung) versehen, die an der tiefsten Stelle mindestens eine Öffnung 25 aufweisen. In diesen Vertiefungen 24 wird die wesentliche Menge der beim Grillen frei werdende Flüssigkeit gesammelt und diese kann durch die Öffnungen 25 auf nicht dargestellte Fettablaufrinnen und das Sammelblech ablaufen. Im gerundeten Bereich 21 weist das Leitblech 14 eine Mehrzahl von Öffnungen bzw. Schlitze 26 auf, durch die Heissluft konzentriert auf das Grillgut geführt wird, ähnlich zu einem Rückwandstrahler. Die Schlitze 26 sind in ihrer Längsausdehnung bevorzugt horizontal angeordnet.

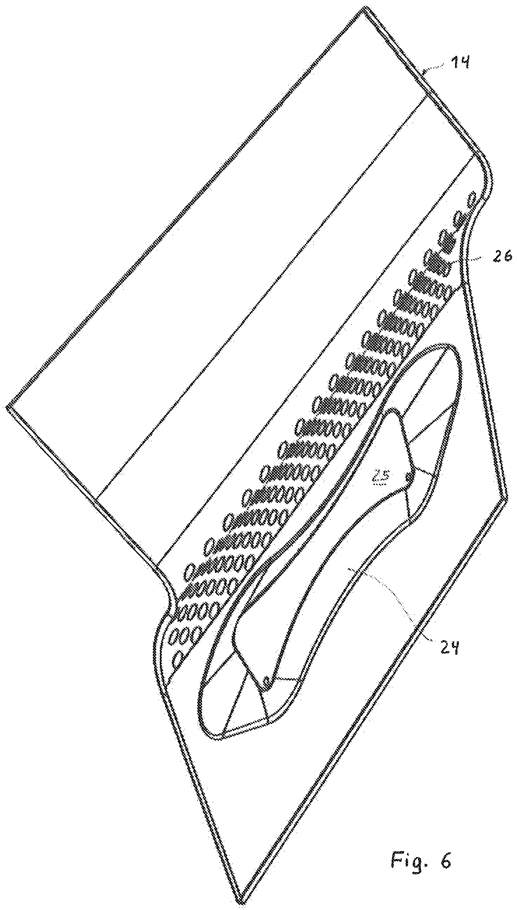

In einer weiteren Ausführungsform kann am Leitblech 14 anstelle mehrerer Vertiefungen 24 zum Beispiel auch eine einzige, grosse Vertiefung 24 mit ebenfalls nur einer Öffnung 25 ausgeformt sein (Fig. 6). Ebenso können die Öffnungen 26 zum Beispiel rund oder kreisförmig anstatt schlitzförmig ausgebildet sein.

Der Grillrost 6 wird bevorzugt zum einsetzen des Leitblechs 14 entfernt (und nach der Entnahme des Leitblechs 14 wieder aufgelegt).

Das Leitblech 14 findet insbesondere in Verbindung mit einem Drehspiess Anwendung, der zwischen den Seitenwänden 10 oder einer Seitenwand 10 und dem Trennblech 12 drehbar gelagert anordenbar ist. Das Leitblech 14 ist daher so geformt, dass das zu drehende Grillgut einen möglichst gleichmässigen Abstand vom Leitblech 14 im gerundeten Bereich 21 und im ansteigenden Bereich über den Vertiefungen 24 aufweist.

Das Leitblech 14 ermöglicht ein energiesparendes, indirektes Garen von Grillgut und wirkt als Geschmacksverstärker für das Grillgut infolge der Heissluftführung durch die Schlitze 26 und von in den Vertiefungen 24 verdunstender Flüssigkeit.

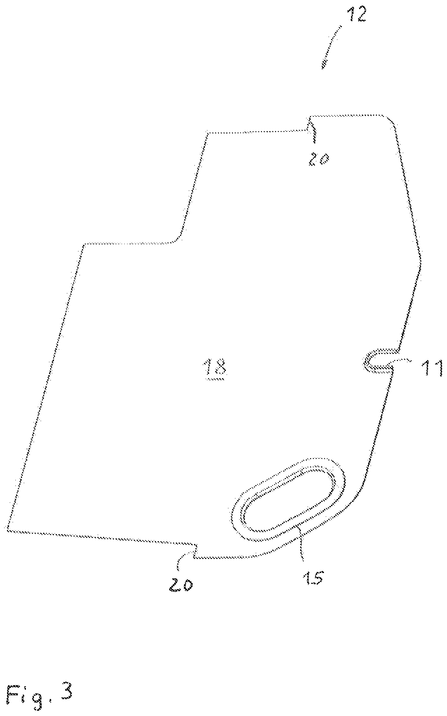

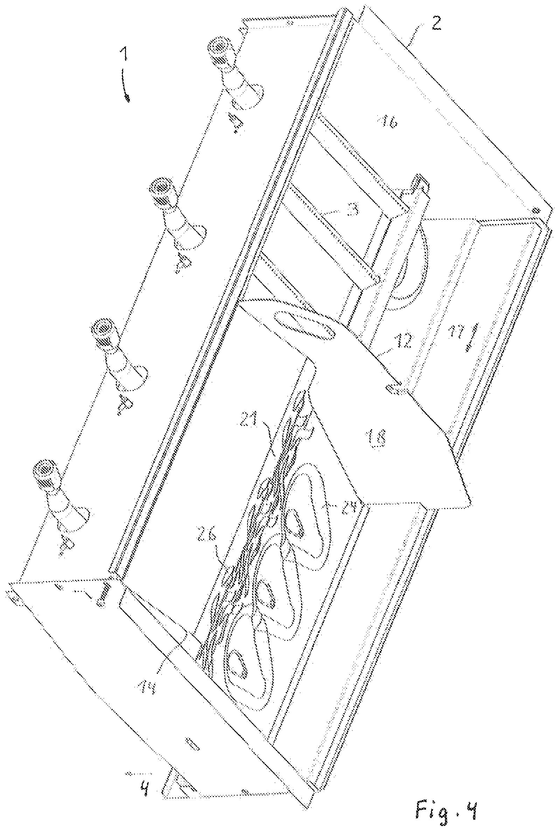

Parallel zu den festen Seitenwänden 10 kann noch ein einlegbares Trennblech 12 (DGS Zone divider) vorgesehen sein, das die Grillfläche teilen kann und das an der Brennkammer 2 geführt ist. Im Ausführungsbeispiel liegt es auf dem inneren Rand der Brennerkammer 2 auf. Hierzu sind Absätze 20 als Auflage- und Positionierhilfen am Trennblech 12 ausgeformt. Das Trennblech 12 erstreckt sich bis unterhalb des Grillrosts 6, siehe Fig. 3 und 4. Das Trennblech 12 ist mit einer Öffnung zum Eingriff von Fingern resp. einer Hand versehen. Das Trennblech 12 kann ggf. zusätzlich einen horizontal und beidseitig zu seiner Hauptfläche 18 und entlang der Ausdehnung zwischen den Absätzen 20 verlaufenden Steg aufweisen. Mit diesem optionalen Steg könnte das Trennblech 12 dann auf die Randbereiche zweier benachbarter Roste 61, 62 resp. einen inneren Rand der Brennerkammer 2 aufgelegt werden.

Mit oder ohne Steg erstreckt sich das Trennblech 12 unterhalb der Rostfläche noch weiter, ggf. bis zur Brenneranordnung 3, und ist im Spalt zwischen den Rosten 61, 62 geführt. Ebenso können am Trennblech 12 auch Aufnahmen 11 (Lager) für einen Drehspiess o. a. sowie eine Greiföffnung 15 in der Hauptfläche 18 vorgesehen sein.

Anstelle einer Brenneranordnung 3 können auch Elektroheizstäbe als Wärmequelle eingesetzt werden, bei entsprechender konstruktiver Anpassung auch Holzkohle, Brikettes, Pellets oder andere brennbare, organische Stoffe.

### Liste der Bezugszeichen

- 1: Gasgrill
- 2: Brennkammer
- 3: Brenneranordnung
- 4: Untergestell
- 5: Haube
- 6: Grillrost
- 7: Handgriff
- 8: Drehgriff
- 9: Leuchtring
- 10: Seitenwand
- 11: Aufnahme
- 12: Trennblech
- 14: Leitblech
- 15: Greiföffnung
- 16: Brennkammerebene
- 17: Hauptachse
- 18: Hauptfläche
- 19: Flammenschutz
- 20: Absatz
- 21: Bereich
- 22: Kante
- 23: Kante
- 24: Vertiefung
- 25: Öffnung
- 26: Schlitz
- 61: Rost
- 62: Rost

## Patentansprüche

1. Leitblech für einen Grill, Gasgrill, Elektrogrill, Pellet- oder Holzkohlengrill, der eine Brennkammer (2) für eine Wärmequelle, wie zum Beispiel Gasbrenner, Elektroheizungen oder Holzkohle aufweist, **dadurch gekennzeichnet, dass** es so ausgebildet ist, dass es mit ansteigender Neigung in einen gerundeten Bereich (21) übergeht, an den sich ein weiterer geneigter Bereich anschliesst, und dass weiterhin die geneigten Bereiche an Auflagestellen zur Brennkammer (2) hin winklig abgekantet sind, zwischen einer frontseitigen Kante (22) und dem gerundeten Bereich (21) mit mindestens einer oder mehreren Vertiefungen 24 versehen ist, die an ihrer tiefsten Stelle mindestens eine Öffnung (25) aufweisen, und dass im gerundeten Bereich (21) eine Mehrzahl von Öffnungen bzw. Schlitzen (26) vorgesehen ist.

2. Grill zum Grillen, Garen oder Backen von Speisen auf einem Grillrost (6) oder dergleichen, insbesondere zur Verwendung im Freien, der eine Brennkammer (2) umfasst, in der eine Brenneranordnung (3) vorgesehen ist, wobei die Brennkammer (2) mit einer klappbaren Haube (5) versehen ist, die im geschlossenen Zustand den Grillrost (6) abdeckt, **dadurch gekennzeichnet, dass** der Grill mit einem Leitblech (14) nach Anspruch 1 versehen ist, das in Richtung einer Hauptachse (17) der Brennkammer (2) in beliebiger Breite ausgeführt sein kann und dabei zumindest einen Teil der Brenneranordnung (3) abdeckt, wobei es sich zwischen Frontseite und Rückwand der Brennkammer (2) erstreckt und auf inneren Rändern der Brennkammer (2) aufliegend dergestalt ausgebildet ist, dass es, von einer Frontseite der Brennkammer (2) ausgehend, mit ansteigender Neigung in den gerundeten Bereich (21) übergeht, an den sich der weitere geneigte Bereich anschliesst, und dass die Mehrzahl von Öffnungen zur konzentrierten Führung von Heissluft dient.

3. Grill nach Anspruch 2, **dadurch gekennzeichnet, dass** die geneigten Bereiche des Leitblechs (14) gerade oder leicht gebogen sind.

4. Grill nach Anspruch 2 oder 3, **dadurch gekennzeichnet, dass** die geneigten Bereiche an Auflagestellen zur Brennkammer (2) hin winklig abgekantet sind.

5. Grill nach Anspruch 4, **dadurch gekennzeichnet, dass** Kanten (22, 23) des Leitblechs (14) an den Auflagestellen zur Hauptfläche des Leitblechs (14) um bis zu 90° abgekantet sind.

6. Grill nach einem der Ansprüche 2 bis 5, **dadurch gekennzeichnet, dass** er mit einem, den Grillrost (6) teilenden Trennblech (12) versehen ist, das zusätzlich einen senkrecht und beidseitig zu seiner Hauptfläche (18) verlaufenden Steg aufweisen kann, wobei sich die Hauptfläche (18) in beiden Ausführungsformen auch unterhalb des Grillrosts (6), bis hin zur Brenneranordnung (3), erstreckt.

7. Grill nach einem der Ansprüche 2 bis 6, **dadurch gekennzeichnet, dass** er mit mindestens einem Drehgriff (8) zur Einstellung der Brennerleistung versehen ist, dem ein Leuchtring (9) in Form von farbigen LED zugeordnet ist.

## Claims

1. A baffle plate for a grill, gas grill, electric grill, pellet grill or charcoal grill having a burner chamber (2) for a heat source, e.g. gas burners, electric heaters or charcoal, **characterized in that** said baffle plate is designed in such a way that it transforms with increasing incline into a rounded region (21), which is followed by another inclined region, **in that** the inclined regions furthermore are angularly beveled toward the burner chamber (2) at support points, **in that** at least one or more depressions (24), which have at least one opening (25) at their lowest point, are provided between a front edge (22) and the rounded region (21), and **in that** a plurality of openings or slots (26) is provided in the rounded region (21).

2. A grill for grilling, cooking or baking meals on a grill grate (6) or the like, particularly for outdoor use, wherein said grill comprises a burner chamber (2), in which a burner arrangement (3) is provided, and wherein the burner chamber (2) is provided with a hinged hood (5) that covers the grill grate (6) in the closed state, **characterized in that** the grill is provided with a baffle plate (14) according to claim 1, which may have any desired width in the direction of a main axis (17) of the burner chamber (2) and covers at least part of the burner arrangement (3), wherein said baffle plate extends between the front side and the rear wall of the burner chamber (2) and is designed for lying on the inner edges of the burner chamber (2) in such a way that, starting from the front side of the burner chamber (2), it transforms with increasing incline into the rounded region (21), which is followed by the other inclined region, and **in that** the plurality of openings serves for conveying hot air in a concentrated manner.

3. The grill according to claim 2, **characterized in that** the inclined regions of the baffle plate (14) are straight or slightly bent.

4. The grill according to claim 2 or 3, **characterized in that** the inclined regions are angularly beveled toward the burner chamber (2) at support points.

5. The grill according to claim 4, **characterized in that** edges (22, 23) of the baffle plate (14) are beveled toward the main surface of the baffle plate (14) by up to 90° at the support points.

6. The grill according to one of claims 2 to 5, **characterized in that** it is provided with a separating plate (12), which divides the grill grate (6) and may additionally have a web extending perpendicular to and on both sides of its main surface (18), wherein the main surface (18) also extends up to the burner arrangement (3) underneath the grill grate (6) in both embodiments.

7. The grill according to one of claims 2 to 6, **characterized in that** it is provided with at least one rotary handle (8) for adjusting the burner power, wherein a luminous ring (9) in the form of colored LEDs is assigned to said rotary handle.

## Revendications

1. Tôle déflectrice destinée à un barbecue, à un barbecue à gaz, à un barbecue électrique, à un barbecue à pellets ou à un barbecue au charbon de bois, qui comporte une chambre de combustion (2) pour une source thermique, comme par exemple un brûleur à gaz, des chauffages électriques ou du charbon de bois, **caractérisée en ce qu'**elle est conçue de sorte à passer avec une inclinaison montante dans une zone (21) arrondie, sur laquelle se raccorde une autre zone inclinée et **en ce que** par ailleurs, les zones inclinées sont angulairement repliées sur des points d'appui vers la chambre de combustion (2), est munie sur une arête (22) frontale et sur la zone (21) arrondie d'au moins un ou de plusieurs creux (24), qui sur leur point le plus profond comportent au moins un orifice (25) et **en ce que** dans la zone (21) arrondie est prévue une multiplicité d'orifices ou de fentes (26) .

2. Barbecue, destiné à griller, à faire cuire ou cuire au four des aliments sur une grille (6) ou similaire, destiné notamment à une utilisation en extérieur, qui comprend une chambre de combustion (2) dans laquelle est prévu un ensemble de brûleurs (3), la chambre de combustion (2) étant munie d'un capot (5) rabattable, qui lorsqu'il est fermé recouvre la grille (6), **caractérisé en ce que** le barbecue est muni d'une tôle déflectrice (14) selon la revendication 1, qui en direction d'un axe principal (17) de la chambre de combustion (2) peut être réalisée dans une largeur quelconque et recouvre à cet effet au moins une partie de l'ensemble de brûleurs (3), sachant qu'elle s'étend entre la face frontale et la paroi arrière de la chambre de combustion (2) et est conçue de sorte à reposer sur des bords intérieurs de la chambre de combustion (2) de telle sorte qu'en partant d'une face frontale de la chambre de combustion (2), elle passe avec une inclinaison montante dans la zone (21) arrondie, sur laquelle se raccorde l'autre zone inclinée et **en ce que** la multiplicité d'orifices sert au guidage concentré d'air chaud.

3. Barbecue selon la revendication 2, **caractérisé en ce que** les zones inclinées de la tôle déflectrice (14) sont rectilignes ou légèrement incurvées.

4. Barbecue selon la revendication 2 ou 3, **caractérisé en ce que** sur des points d'appui vers la chambre de combustion (2), les zones inclinées sont angulairement repliées.

5. Barbecue selon la revendication 4, **caractérisé en ce que** sur les points d'appui vers la surface principale de la tôle déflectrice (14), des arêtes (22, 23) de la tôle déflectrice (14) sont repliées de jusqu'à 90°.

6. Barbecue selon l'une quelconque des revendications 2 à 5, **caractérisé en ce qu'**il est muni d'une tôle séparatrice (12) qui divise la grille (6), qui peut comporter additionnellement un listel s'écoulant à la perpendiculaire et de part et d'autre de sa surface principale (18), dans les deux formes de réalisation, la surface principale (18) s'étendant également en dessous de la grille (6), jusqu'à l'ensemble de brûleurs (3).

7. Barbecue selon l'une quelconque des revendications 2 à 6, **caractérisé en ce qu'**il est muni d'au moins une poignée rotative (8), destinée à régler la puissance du brûleur, à laquelle est associée une bague lumineuse (9), sous la forme de LED colorées.
